# EUROPEAN PATENT SPECIFICATION

(11) **EP 1 711 324 B1**
(45) Date of publication and mention of the grant of the patent: **10.11.2010**
(21) Application number: 05712047.9
(22) Date of filing: 20.01.2005
(51) Int. Cl.: B29C 33/38, B29C 33/56, B29C 70/30

(54) **CARBON FOAM COMPOSITE TOOLING AND METHODS FOR USING THE SAME**
KOHLENSTOFFSCHAUMVERBUNDWERKZEUG UND VERWENDUNGSVERFAHREN DAFÜR
OUTILLAGE COMPOSITE EN MOUSSE DE CARBONE ET SES PROCEDES D'UTILISATION

(30) Priority: 20.01.2004 US 536999 P; 29.06.2004 US 878151; 29.06.2004 US 878125
(43) Date of publication of application: 18.10.2006
(73) Proprietor: Touchstone Research Laboratory Ltd., Triadelphia, WV 26059 (US)
(72) Inventor: JOSEPH, Brian, E., Wheeling, WV 26003 (US); LUCAS, Rick, D., St. Clairsville, OH 43950 (US); MERRIMAN, Douglas, J., Wheeling, WV 26003 (US)
(74) Representative: Kröncke, Rolf
(86) International application number: PCT/US2005/002416
(87) International publication number: WO 2005/070642

(56) References cited:
- US-A- 5 868 974
- ARVIND KUPPUSAMY: "Development of Framework for Rapid Tool Manufacture for RIDFT Process" 2003, THE FLORIDA STATE UNIVERSITY COLLEGE OF ENGINEERING , XP002327214 page 47, paragraph 3.4.4 page 1 - page 2
- ANONYMOUS: "CFOAM Carbon Foam" INTERNET ARTICLE, [Online] 1 August 2003 (2003-08-01), XP002327215 Retrieved from the Internet: URL:www.mdatechnology.net/techsearch.asp?a rticleid=601> [retrieved on 2005-05-04]
- ANONYMOUS: "CFOAM Hits the Beach" INTERNET ARTICLE, [Online] 2003, XP002327216 Retrieved from the Internet: URL:www.mdatechnology.net/update_article.a sp?id=4302> [retrieved on 2005-05-04]
- "Cfoam a Hit With Government Agencies and Others" ADVANCED MATERIALS AND COMPOSITE NEWS, vol. 25, no. 22, 17 November 2003 (2003-11-17), pages 5-6, XP008046536 SOLANA BEACH, CALIFORNIA, USA

## Description

### Field of the Invention

This invention relates to composite tooling and methods for using the same, more specifically incorporating carbon foam in a tool body for forming parts made from composite materials.

### Background of the Invention

Generally, composite materials are prepared by imbedding a reinforcing material within a matrix material. Composite materials having high degrees of utility typically exhibit mechanical or other properties superior to those of the individual materials from which the composite was formed. A common example of a composite material is fiberglass. Fiberglass is glass fibers, which are the reinforcing material, embedded in a cured resin, which constitutes the matrix material.

Composite materials have been found to have a high degree of utility when used as parts of structures, components, sub assemblies, and the like, of assemblages such as aircraft, missiles, boats, medical equipment, and sporting goods. A composite commonly used in such applications is fiberglass. Other composites having particularly high degrees of utility in such applications are those that are prepared from carbon fibers combined with a matrix material such as thermoset (e.g. thermosetting and the like) and/or thermoplastic resins. Such composites are referred to as carbon fiber composites (herein after referred to as CFC), or more commonly, carbon composites. Carbon composites have been used, for example, as aircraft flight surfaces, missile bodies, orthopedic supports, and golf club shafts. The utility of such carbon composites is typically related to their exceptionally high strength to weight ratio and their fatigue and corrosion resistance. In most instances, these beneficial properties exceed those of the metals or other materials supplanted by the use of the carbon composites. Additionally, some types of carbon fiber composites can be carbonized to form carbon-carbon composites.

Specific fiber orientations may be desired in the final composite product to impart accentuated strength, stiffness, and/or flexibility along certain axes. Furthermore, composite forming materials, particularly carbon fiber, are relatively expensive and wastage is generally discouraged. Therefore, composites are produced in sizes, shapes, and forms that closely match those required by the intended application. In fact, composites, particularly carbon fiber composites used in aerospace and many other applications, are routinely produced, within very restrictive tolerances, to the required size.

The forming of composites, including carbon composites, to such high dimensional requirements is typically accomplished by the use of mold like devices commonly referred to as tools. These tools encompass one or more surfaces, referred to as tool faces, upon which the composite is formed, shaped, molded, or otherwise produced into components of predetermined sizes and shapes. Such components can include structures, parts, sub assemblies and the like. The tool face is a surface typically formed such that it is a precise three dimensional negative mirror image of a surface of the desired composite component. That is, a raised surface on the composite part will be matched and formed by an equivalently (negatively) dimensioned surface depression of the tool face. Likewise, a recessed surface on the composite part will be matched and formed by an equivalently (negatively) dimensioned raised surface of the tool face. In practice, a mixture of a reinforcing material and a matrix material, for example carbon fiber and a resin, are placed upon the tool face by any number of procedures and brought into intimate contact with that tool face. The dimensions of the tool face are such that this contact effectively molds a surface of the matrix material and reinforcing material mixture into the desired shape and dimensions. The matrix material is then solidified, typically by curing of the resin, to produce the composite component. For example, a carbon fiber containing resin is cured, typically by the application of heat, to yield a solid CFC component having a surface exhibiting the shape and dimensions imparted by the tool face.

In addition to the tool face, a tool is also comprised of a tool body and typically a support structure. The tool body comprises the tool face. That is, the tool face upon which the composite, for example a CFC, is formed is a surface of the tool body. The tool body may also encompass a cover which minimally encloses the tool face, or a portion thereof, such that an essentially closed volume is formed between the tool face and the cover. The support structure is connected to the tool body and may serve a number of purposes, including but not limited to, support, orientation, and transportation of the tool body and face along with protection of the tool body and face from damage.

Important characteristics of tooling include, for example, quality, weight, strength, size, cost, ease of repair, and the like. Additionally, rigidity and durability are considered to be very important characteristics of tooling. All of these characteristics are dependent on the tool design, the materials of construction of the tool, and on the materials used to form the composite.

A characteristic of the tooling that is very important is the coefficient of thermal expansion (herein after referred to as CTE and CTEs in the plural form) exhibited by the tool face. As the tool face is a surface of the tool body, the CTE exhibited by the tool face is dependent on the material of which the tool body is composed. It is generally desired that the tool face exhibit a CTE that is substantially similar or equivalent to the CTE of the formed composite part. Preferably, the CTE exhibited by the tool face should be similar or equivalent to the CTE of the formed composite part over a wide temperature range. The importance of having a substantial similarity, or more preferably equivalence, between the CTE of the composite part and that exhibited by the tool face is related to the manner in which composite parts are prepared using tools. That is, typically, the materials used to form the composite are placed on the tool face at room temperature. The temperature of the tool and composite forming materials is then increased to some elevated temperature, typically such as 138,9° C (250°F) or more, to cure the resin of the composite material. Once the resin is cured, the resulting composite part, for example a CFC, is rigid. Following resin curing, the tool face and composite part are cooled to room temperatures. Such exposure to temperatures significantly above room temperature is the reason it is desired that the CTE of the tooling match that of the resulting composite part. For example, if the CTE of the composite part is significantly less than that exhibited by the tool face, the composite part may be trapped or retained in the tool by the relatively greater contraction of the tool face dimensions with cooling. Conversely, if the CTE of the composite part is significantly greater than that exhibited by the tool face, the part may again be retained in the tool or may damage the tool face during contraction or cured composite dimensions may differ from those of the tool face.

Typically, carbon composites have relatively low CTEs while the CTEs for most other materials are much higher. Therefore it is very difficult to match the CTE exhibited by the tool face with the CTE of a carbon composite as there are few materials available for construction of the tool body that have sufficiently low CTEs. Such available low CTE materials suitable for construction of the tool body include, for example, other carbon composites, INVAR^{®} (e.g., a controlled expansion nickel iron alloy), and the like.

INVAR^{®} is durable and has a CTE that is substantially similar to that of carbon composites. However, INVAR^{®} based tools are typically heavy, difficult to fabricate, and can require, for example, as many as seventeen separate stages to fabricate. Such numerous fabrication stages can lead to about a 140% to about a 250% increase in tooling costs and a four fold increase in lead times, as discussed in "Fabrication and Analysis of Invar Faced Composites for Tooling Applications", Proceedings of Tooling Composites 93, Pasadena, California, which is hereby incorporated by reference.

Similar to INVAR^{®} based tooling, carbon fiber composite based tooling is capable of matching the CTE of CFC parts, and the like, even for example, the difficult to match CTE of low CTE materials. For this type of tooling, carbon fiber composites are used as the total tool body and/or that portion of the tool body defining the tool face. Carbon fiber composite based tooling is advantageous as such CFC based tools are less expensive, lighter, have a low thermal mass, and require shorter lead times for tool manufacturing than does conventional tooling such as that based upon INVAR^{®}. However, CFC based tools are usually susceptible to damage if not handled with care, especially when composite is laid thereon. Additionally, surface degradation of CFC based tools may occur as a result of the repetition of the process cycle due to a combination of component adhesion, CTE mismatch, and oxidative decomposition. Furthermore, any necessary repairs of CFC based tools leads to an increase in repair and maintenance costs. Also, CFC based tools are subject to dimensional stresses from uneven support. Accordingly, due to the aforementioned problems, CFC based tooling is not commonly used.

There are other important characteristics of composite tooling, particularly CFC tooling, that should also be considered. For example, in addition to being rigid, durable, strong, and CTE matchable, the tooling should also be low cost and easy to produce. That is, a factor usually considered when selecting material for a tool body is the total number of parts to be produced. Included in this consideration is the fact that production of large numbers of parts can more easily justify expensive tooling. Overall, however, it is generally accepted that rigid, strong, durable, and CTE matchable tooling, which can be easily produced at low cost, irrespective of the planned number of parts, is desired.

Carbon foams are materials of very high carbon content that have appreciable void volume. In appearance, excepting color, carbon foams can resemble readily available commercial plastic foams. As with plastic foams, the void volume of carbon foams is located within numerous empty cells. The boundaries of these cells are defined by the carbon structure. These cells typically approximate spheres or ovoids of regular, but not necessarily uniform, size, shape, distribution, and orientation. The void volumes in these cells typically connect directly to neighboring void volumes. Such an arrangement is referred to as an open cell foam. The carbon in these foams forms a structure that is continuous in three dimensions across the material. Typically, the cells in carbon foams are of a size that is readily visible to the unaided human eye. Also, the void volume of carbon foams is such that it typically occupies much greater than one half of the carbon foam volume. The regular size, shape, distribution, and orientation of the cells within carbon foam readily distinguish this material from other materials such as metallurgical cokes. Carbon foams have been prepared from a variety of feed stocks using a variety of processes. For example, feed stocks for carbon foam production have included, but are not limited to, pitches, coals, and coal derivatives. Likewise, processes for the production of carbon foams from each of these feed stocks have been identified. Most of these processes include exposure of the carbon foam to an elevated temperature, sometimes as great as about 3000° C, after preparation of the foam.

In Kuppusamy, Arvid, Develepment of framework for rapid tool manufacture for RIDFT process, the use of carbon foam as material in a RIDFT method is described. The carbon material is described as being powdery, brittle and tears the silicone sheets.

In Advanced Materials and Composite News, Vol. 25; No. 22, 17.11.2003, p. 5-6 a C-foam is reported. Therein it is described generally that carbon foam can be used for tooling. Furthermore, it is identified that the material may be used in composite tooling in accordance with the preamble of claims 1 and 11.

### Summary of the Invention

Tools, for the forming of composite parts from composite forming materials, having tool bodies comprising, at least in part, carbon foam are disclosed. A surface of the incorporated carbon foam may define at least a portion of one tool face of a tooL The carbon foam supports a tool face material, a surface of which defines at least a portion of one tool face of a tool in accordance with claim 1. The incorporated carbon foam may be partially or completely filled with a filling material. Some filling materials may be carbonized after filling of the carbon foam. The use of filling materials may provide, for example, a smoother tool face and/or cause some areas of the carbon foam to become impermeable to the passage of gases or other materials. Tool face materials may include, but are not limited to, composites, in particular carbon fiber composites, resins, metals, including arc sprayed metals, ceramics, and other materials.

The tool faces of the disclosed tools may exhibit coefficients of thermal expansion (CTEs) that are relatively low. Tool faces having such low CTEs may be particularly useful for the preparation of low CTE composites such as carbon fiber composites (CFC). . For example, a tool body comprising carbon foam, where a surface of the carbon foam is a tool face for the production of carbon fiber composites (CFC) is particularly advantageous as the CTE of carbon foam may match that of the resulting CFC. As another example, the carbon foam of the disclosed tools may support a tool face material, such as a CFC, a surface of which provides a tool face for the production of carbon fiber composites (CFC). In this example, the CTE of carbon foam matches that of the tool face material and the resulting CFC.

The disclosed tools may be lighter, more durable, and less costly to produce and/or use than conventional tools used for the production of composite parts, particularly those tools used for the production of CFC. Additionally, such tools may be reusable, repairable, and more readily modifiable than those tools of the prior art.

In certain embodiments, the invention may include a tool for the production of at least one composite part, the tool comprising a tool body wherein at least a portion of the tool body is carbon foam. A surface of the tool body defines a tool face, and a portion of the tool face may be at least partially a surface of the carbon foam comprising the tool body. In some embodiments, the cells of the carbon foam may be at least partially filled with a filling material. The filling material may be a cured resin, a pitch, a cured moldable ceramic, a carbonized resin, or a carbonized pitch. In certain embodiments, the coefficient of thermal expansion of the tool face is substantially similar to the coefficient of thermal expansion of the composite part produced on the tool face. In further embodiments, at least a portion of the carbon foam comprising the tool body at least partially supports a tool face material. The tool face material may be metals, ceramics a cured resin, a fiber composite, a carbon fiber composite, a particulate composite, INVAR^{®}, silicon carbide, or zirconia ceramics. The carbon foam may be derived at least in part from pitch, coal, or a coal derivative. In other embodiments, tool body may be mandrel shaped. Still further, the tool may further comprise a cover positioned over at least a portion of the tool face and enclose at least a portion of the tool face. The tool may also include a resin reservoir connection port in vacuum communication with the enclosed portion of the tool face. The resin reservoir connection port may be adapted to be connected to a resin reservoir system and provides for resin transfer from the resin reservoir system to the enclosed portion of the tool face when a vacuum is created in the enclosed portion of the tool face.

Certain embodiments of the invention may also include a method for producing at least one composite part, as defined in claim 11. . The composite forming material may include a mixture of a resin and at least one selected from the group consisting of a particulate reinforcing material and a fibrous reinforcing material. The method may further include the step of placing a parting film between the composite forming materials and the tool face. The method may also include the step of coating at least a portion of the tool face with a release agent prior to contacting the tool face with the composite forming material Still further, the tool may further include a cover positioned over at least a portion of the tool face and enclosing at least a portion of the tool face, and the composite forming material may be placed on the enclosed portion of the tool face. A vacuum may be pulled within the enclosed portion of the tool face.

### Brief Description of the Figures

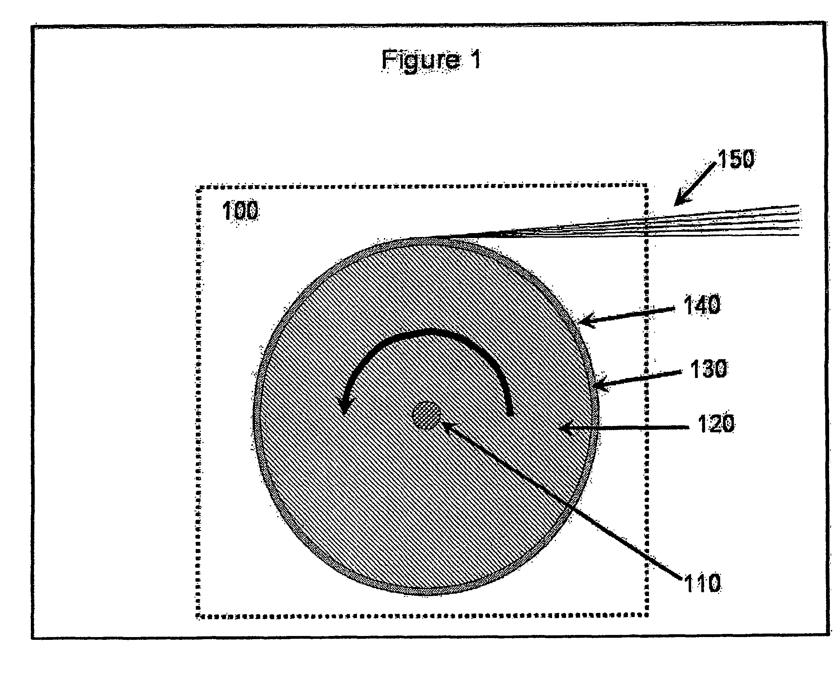

Figure 1 illustrates a cross-sectional representation of a reusable tool which comprises a mandrel comprised in part of carbon foam. Composite forming materials are then placed on the outer surface of this mandrel for the purpose of forming a composite part.

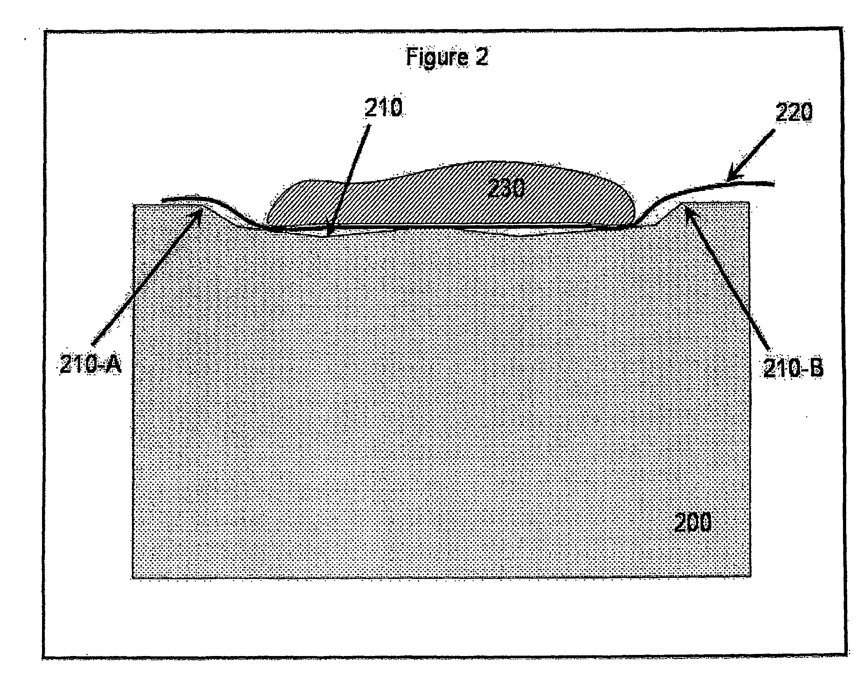

Figure 2 illustrates a cross-sectional representation of a reusable tool which comprises a tool body comprised at least in part of carbon foam where a surface of the carbon foam has been machined or otherwise contoured or formed to a desired configuration to serve as a tool face.

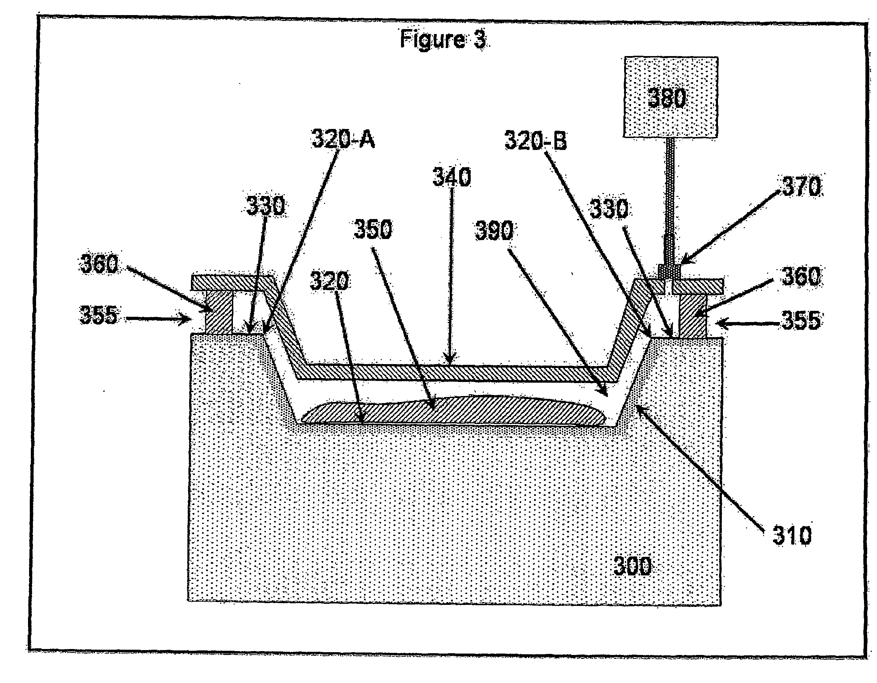

Figure 3 illustrates a cross-sectional representation of a reusable tool which comprises a tool body comprised at least in part of carbon foam wherein a surface of the carbon foam incorporated in the tool body supports an impermeable tool face material. A section of this tool face material has been machined or otherwise contoured or formed to a desired configuration to serve as a tool face.

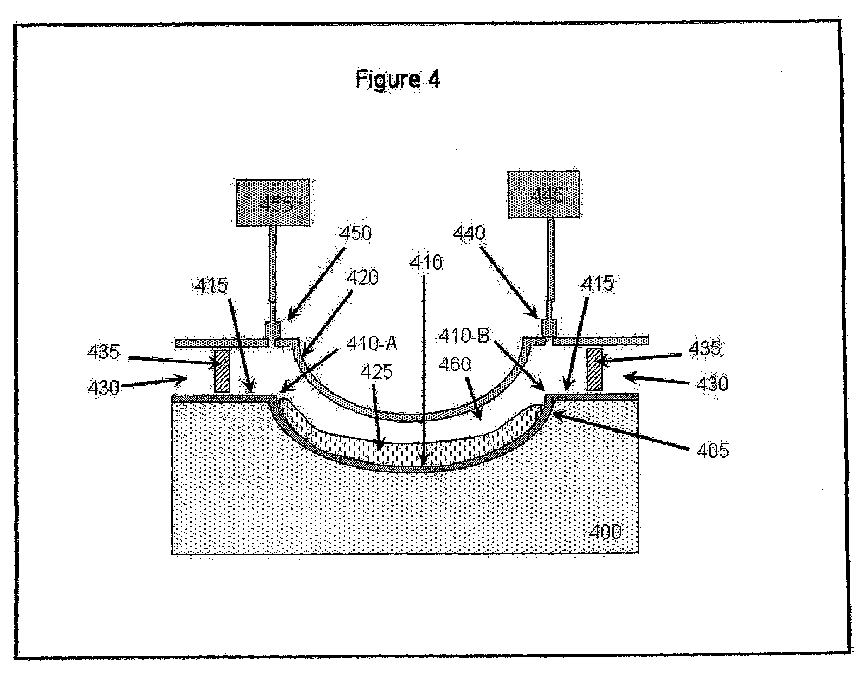

Figure 4 illustrates a cross-sectional representation of a reusable tool which comprises a tool body comprised at least in part of carbon foam where a surface of the carbon foam incorporated in the tool body supports an impermeable tool face material. A section of this tool face material has been machined or otherwise contoured or formed to a desired configuration to serve as a tool face.

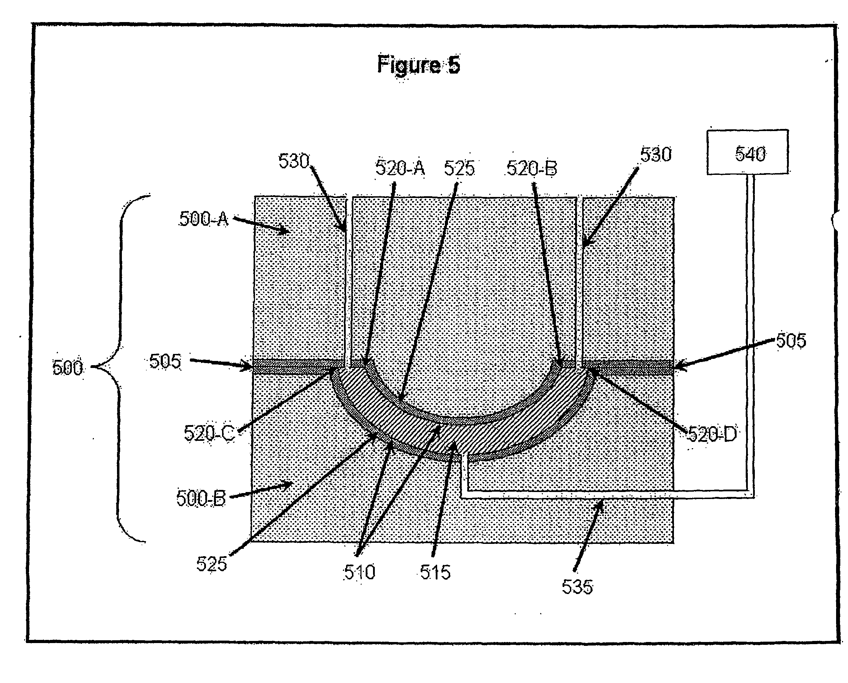

Figure 5 illustrates a cross-sectional representation of a reusable tool which comprises a tool body comprised at least in part of two mutually opposed sections of carbon foam where a mutually opposed surface of each section of carbon foam supports a tool face material, the surfaces of which serves as the tool faces.

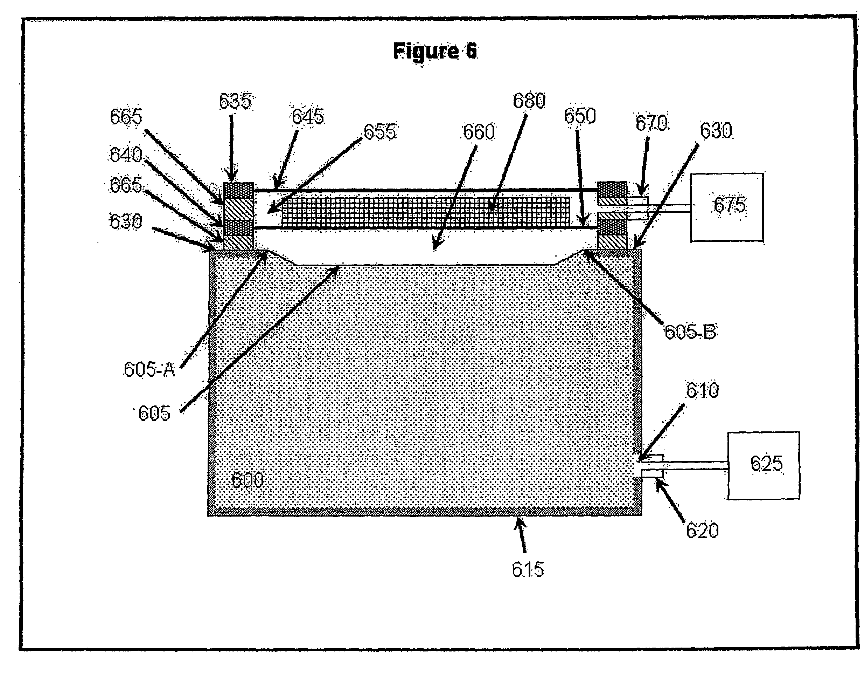

Figure 6 illustrates a cross-sectional representation of a reusable tool which comprises a tool body comprised at least in part of carbon foam where a surface of the carbon foam incorporated in the tool body has been machined or otherwise contoured or formed to a desired configuration to serve as a tool face.

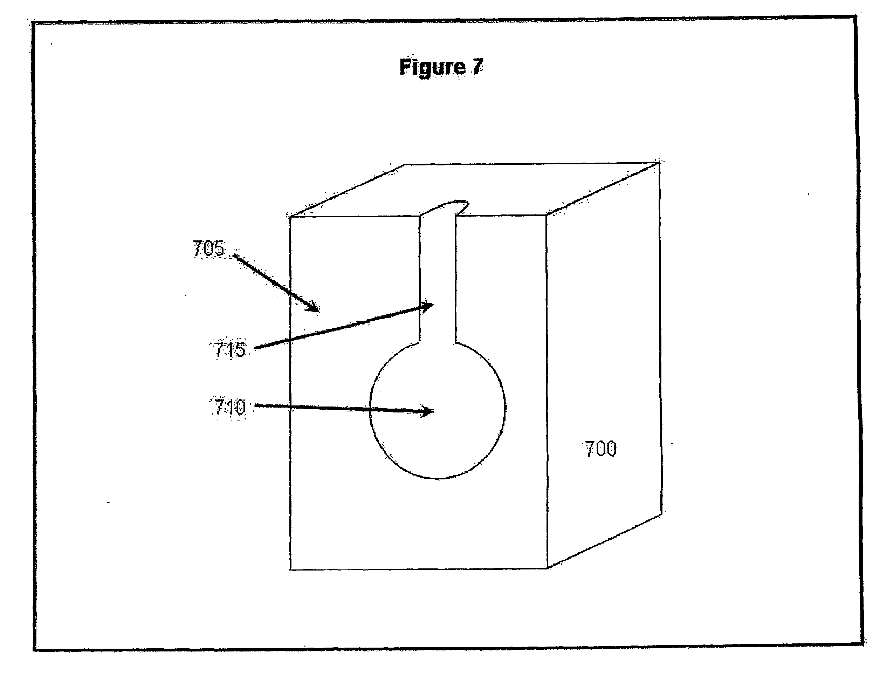

Figure 7 illustrates a cross-sectional representation of a first half of a reusable tool body comprised at least in part of carbon foam, having a surface into which is formed a channel and a shape.

### Detailed Description of Embodiments of the Invention

Tooling may be used to fabricate parts, including composite parts, of various types, shapes, sizes and materials with a high dimensional accuracy. The design of the tooling typically is dependent on the desired shape of the part to be formed, the materials used to form the part, the amount of strength and rigidity which the tooling must have to support the materials necessary for forming the part, and/or the method used to provide the materials for forming the part.

Tools encompass one or more surfaces, referred to as tool faces, upon which material is formed, shaped, molded, or otherwise produced into a part(s) having a surface(s) of predetermined sizes and shapes. Such parts can include, but are not limited to, structures, parts, sub assemblies, portions of components, partial components, and the like, including any solid form having a shaped surface. The tool face is a surface of the tool body, typically formed such that it is a precise three dimensional negative mirror image of a desired surface of a part. That is, a raised surface on the part, for example a composite part, will be matched and formed by an equivalently (negatively) dimensioned surface depression of the tool face. Likewise, a recessed surface on the part will be matched and formed by an equivalently (negatively) dimensioned raised surface of the tool face.

In practice, materials comprising a composite part may be placed upon the tool face by any of a number of procedures. Commonly, composites utilize a resin(s) as the matrix material and fiber as the reinforcing material. But, a resin(s) and a particulate(s) may also be used as the matrix and reinforcing material, respectively. Sometimes fiber placement is closely controlled such that the resulting composite part exhibits a specific fiber spacing and/or orientation. The fiber and resin may be mixed or otherwise combined prior to placement of the tool face. Alternatively, the fiber may be placed on the tool face and the resin subsequently infused into the fiber by any of a number of procedures. In some instances, prior to the placement of materials which comprise the composite, the tool face may be covered with a thin sheet of material, sometimes referred to as a parting sheet or release film, which forms closely to the tool face. Such sheets may be considered to be a temporary coating on the tool face. The surface of this sheet that is not in contact with the tool face, that is, the outside surface of the sheet, then effectively becomes the tool face. Such sheets may be used to protect the tool face and/or to provide for easier removal or release of the formed composite part. Alternatively, the materials comprising the composite may be prevented from bonding to the tool face by coating the tool face with a release agent. Release agents can include various polymers, including PVA, and waxes, among other materials. Release films may be composed of any of a number of polymeric materials that do not bond with any of the materials comprising the composite. Many types of release materials, films, compounds, and agents are known in the associated arts and may be used with the present invention.

The dimensions of the tool face may be such that a surface of the materials comprising the composite part, commonly a fiber containing resin, is effectively molded into the desired shape and dimensions. The resin(s) included in the materials comprising the composite part may be subsequently cured, typically by the application of heat, to yield a solid composite part having a surface of the shape and dimensions imparted by the tool face. It is not uncommon for such heat to be applied in an oven or autoclave. Use of an autoclave also may provide for the forming of composite parts at elevated pressures.

In addition to the tool face, a tool is comprised of a tool body and typically a support structure. The tool body defines the tool face. That is, the tool face upon which the composite part is formed is a surface of the tool body. The support structure, if present, is connected to the tool body and may serve a number of purposes, including but not limited to, support, orientation, and transportation of the tool body and face along with protection of the tool body and face from damage.

Carbon foam is typically a strong, open cell, durable, stable, easily machined, and relatively unreactive lightweight material. Carbon foams can also exhibit very low coefficients of thermal expansion which can be essentially equivalent to those of carbon fiber composites. The CTE of carbon foam may be modified by control of the maximum temperature to which the carbon foam is exposed during preparation or by feedstock selection of the material used for preparing carbon foam.

The tools of the present invention have tool bodies that incorporate carbon foam. The tool bodies may be completely or partially composed of the carbon foam. The carbon foam of the individual tool bodies may be one or more single pieces of carbon foam. If individual tool bodies are composed of more than one piece of carbon foam, adhesives, resins, and the like may be used to join the multiple pieces of carbon foam. If partially composed of carbon foam, the tool bodies are constructed such that the CTE of the tool face is substantially similar or equivalent to that of the carbon foam and the composite(s), particularly carbon fiber composite(s), parts prepared thereon. If the tool body is completely composed of carbon foam, this carbon foam may have a CTE substantially similar or identical to that of composite, particularly carbon fiber composite, and parts formed thereon.

The tools of the present invention may be reusable, repairable, and more readily modifiable than the tools of the prior art. That is, as reusable, the tools of the present invention may be used to sequentially produce more than one composite part. The carbon foam, comprising at least a portion of the tool body of the tools of the present invention, is bondable using conventional adhesives, resins, and the like, and may be machined to close tolerances using readily available hand and/or machine tools. As a result of these characteristics, the tools are repairable as damaged sections of carbon foam used in a composite forming tool may be readily replaced by undamaged carbon foam. Also, these characteristics of carbon foam provide for the ability to readily replace sections of carbon foam used in a composite forming tool so that sections of a tool face may be modified, as desired, without replacement of the entire tool face.

In the present invention, a surface of the carbon foam incorporated in the tool body serves to support other materials that define at least a portion of the tool face or the entire tool face. By defining the tool face, a surface of the carbon foam or other materials has a geometry or configuration sufficient to impart the desired configuration to a surface of the composite part formed thereon. These other materials, referred to in this specification as tool face materials, have CTEs substantially similar or identical to that of the carbon foam and to that of the composite part, particularly a carbon composite part, prepared thereon. Tool face materials for the production of CFC parts may be carbon composites.

The tool face materials may be utilized in an amount or form such that the observed CTE of the tool face is substantially similar or equivalent to that of the carbon foam and the composite part, particularly a carbon composite part, prepared thereon.

Both the carbonaceous foam of the tool body, and the tool face portion of the tool body, including any tool face materials, may have CTEs substantially similar to or identical with the CTE of the resultant composite part formed on the tool face. In a further embodiment, at least a part of the tool body, particularly that part of the tool body supporting and or defining the tool face, and the tool face, may be set to have a low CTE. The CTE of carbon foam may be typically low and substantially similar or identical to those of carbon fiber composites. Therefore, the use of the tooling of the present invention to fabricate carbon fiber composites, typically of controlled dimensions, is particularly favored. It should be noted that it is possible to vary the CTE of the tool face by judicious selection of the tool face materials. It is also contemplated that the CTE of the tool body may be varied by feedstock selection and/or control of the process conditions used to produce the carbon foam. Such process conditions may include, but are not limited to, the maximum temperature to which the carbon foam is exposed during foam production.

The carbon foam incorporated into the tool bodies of the present invention may be fabricated into various predetermined geometries to provide for tool faces reflecting those geometries. Alternatively, a tool face material may be formed or otherwise fabricated into various predetermined geometries to provide for tool faces reflecting the desired geometries. These geometries are then incorporated into a surface(s) of the composite part formed with the tooling. The tool face(s) defines at least one surface of at least one composite part formed with the tooling. There may be a plurality of different tool faces arranged on the same tool body. Furthermore, the tooling of the present invention can be used with other known types of tooling.

The use of a parting film is typically required to prevent bonding of the composite forming materials to the carbon foam. Even with the use of a parting film, the cell size of the carbon foam may be reflected in the possible surface patterning of the resultant composite part. This size of this patterning may be modified by the use of carbon foams having other cell sizes in the tool body and the resultant tool face. Carbon foams of different cell sizes may be utilized in one tool body. For example, a dense small cell foam may be used to define the tool face while a lighter, large cell foam may be used to support the denser carbon foam defining the tool face. Alternatively, a tool face may incorporate surfaces of both small cell and large cell foam. The surface pattering of the resultant composite part will then reflect the use of carbon foams of different cell sizes.

Such surface pattering may be minimized or eliminated by filling the cells, that is, the internal void volume of the carbon foam, with a filling material. Filling materials may include, but are not limited to cured resins, pitches, cured moldable ceramics, and the like. Some filling materials, including but not limited to cured resins and pitches, may also be carbonized to produce a carbon filling material. The carbon foam may be partially or completely filled with the filling material. For example, only the volume of the carbon foam that is closest to the tool face may be filled with the filling material. Alternatively, a fraction of or the entire internal void volume of the carbon foam may be filled. Such filling may be complete such that each cell is completely loaded with filling material or may be incomplete such that each cell is only partially filled with the filling material. Partial filling of the carbon foam cells will minimize pattering. But, the smoother tool face will be provided by the complete filling of the carbon foam cells minimally at the tool face surface. Additionally, a smoother surface may provide for the use of a release agent, in place of a parting film, to prevent the bonding of the composite forming materials to the tool face. Complete filling of the carbon foam cells in some volume of foam surrounding the tool face, possibly including filling of the carbon foam cells at the tool face surface, with a gas impermeable filling material may be required for those instances where it is desired that a vacuum be produced above the tool face. Additionally, the carbon foam cells may be partially or completely filled with a filling material to increase the mechanical properties, such as strength, of the foam.

It is expected that a carbon foam having cells only partially filled with a filling material will exhibit a CTE essentially equivalent to that exhibited by the foam prior to filling of the cells. It is also expected that a carbonized filling material may have very little impact on the CTE of the carbon foam regardless of degree of cell filling. Cell filling by other materials may result in the foam showing different CTEs before and after filling. The observed post cell filling CTE may be between that of the carbon foam and the filling material. Alternatively, if the cell filling material is sufficiently compressible, the observed CTE may be that of the carbon foam. As described above, carbonized filling materials may have CTE values very close, or even equal, to those of the carbon foam of the tool face. In such a case, the CTE of the tool face would be that of the carbon foam.

In another embodiment of the present invention, material, which may be referred to as tool face material, may be formed, deposited, coated, layered, fixed, or otherwise placed on a surface of the carbon foam of the tool body, to provide at least a portion of a tool face. Relatively thick or relatively thin layers of tool face material(s) may be used, depending on the properties of the tool face material and the intended uses of the surface to which the tool face material is applied. The tool face material may cover the entire tool face. Tool face material may also cover surfaces of the tool body that are not tool faces. Typically, covered non-tool face surfaces may contact the resin or other materials used for forming the composite part. The carbon foam may be machined or otherwise contoured or formed to produce a surface having a specific shape prior to the forming and/or depositing of the tool face material. Forming or depositing the tool face material on such a shape may then produce a tool face having the desired configuration and dimensions. Alternatively, after forming and/or deposition of the tool face material on the carbon foam surface, this material may then be machined or otherwise formed or contoured to provide a tool face of the desired geometry. Machining of the carbon foam or tool face material may be more precisely controlled to the desired dimensions by incorporating witness marks, index pins, or the like, into or on the tool body prior to the initiation of any precision machining operation.

The use of a tool face material may provide for a very smooth tool face of high dimensional accuracy. The use of tool face materials may also provide for easier removal of the formed composite part. Typically, parting films or release agents may be used with the tool faces provided by tool face materials. Additionally, the CTE of a tool face material may be matched with the CTE of the resultant composite part and is matched with the portion of the tool body supporting the tool face material. Such matching may insure the dimensional and structural accuracy and precision of the formed composite part. Additionally, such matching may provide for post curing of parts on or in the tool, as opposed to free standing curing.

The CTE of the tool body, tool face, tool face materials, and composite part are substantially similar or equivalent. The term "substantially similar" or "equivalent" CTE as used herein, may refer to CTE values that are sufficiently close in magnitude that the produced composite part has the desired critical dimensions and is not trapped or retained in, or sprung from, the tool by the effect of non-equivalent expansions and contractions of the composite part and tool face, or, are those having values that are sufficiently close in magnitude that the tool face is not damaged by the effect of non-equivalent expansions and contractions of the composite part and tool face.

It is anticipated that such an occurrence may provide a method achieving a tool face CTE that is not readily obtained by other methods. It is also anticipated that tool faces composed of thin layers of tool face materials exhibit the CTE of the underlying carbon foam. This would especially be expected to occur with very thin layers of tool face materials having some elastic properties.

A number of different materials may be used, alone or in combination, as the tool face material as long as they comply with the definition of claim 1. These materials include, for example, cured resins, including phenolic, polyimide, BMI, and epoxy resins, prepegs, adhesive films, coatings, and the like, either alone or in combination. The tool face material may also be, for example, a composite, including those of fiberglass, carbon fiber, carbon-carbon, and other similar materials including other fiber and particulate composites. Additionally, the tool face material may be INVAR^{®}, silicon carbide, zirconia ceramics, and other metals and ceramics. These types of tool face materials may be deposited on the carbon foam to form a tool face using techniques including, but not limited to, arc and flame spraying and vapor deposition. Suitable tool face materials may be essentially gas impermeable. Metals, ceramics, and carbon composites having low CTEs are particularly useful tool face materials, especially for those tools used to produce CFC.

A vacuum may be produced within a carbon foam tool body to aid in the placement of resin and/or resin based composite tool face materials. Additionally, any undesired surface porosity exhibited by any tool face material after placement on the tool body may be filled by coating the tool face material with a thin layer of resin. Permeation of such thin resin layers into any tool face material surface porosity may be aided by the production of a vacuum within the carbon foam tool body.

The tool face may also be formed such that it imparts a texture to a surface of the composite part formed by the tooling. The tool face may be inscribed with a dimensionally negative pattern such that the positive image of this pattern will be imparted to a surface of the formed composite part. Such patterns may include any combination of a plurality of different textures, cross-hatching, scribe-lines, and the like for establishing an outside shape and/or texture of the composite part. Additionally, the tool face(s) surface may not be homogeneous. For example, one portion of the tool face(s) has a first texture while other portions of the tool face have different textures.

Tool body geometries may be of a mandrel like shape. In this case, the tool face would then be the outer surface of this mandrel like shape. Resin impregnated paper, fabric, fiber, and the like, may then be placed upon the surface of the mandrel (i.e. the tool face) by manual or automatic means to form a composite part having a surface, typically an interior surface, the dimensions of which mirror those of the outer mandrel surface.

Also, the tool faces may be in the form of a male part and/or a female part having cavities and/or projections with opposite shapes on opposing tool faces. In the present invention, at least a portion of one of the opposing tool faces is defined by the carbon foam incorporated in the tool body, or is defined by a surface of a tool face material supported at least in part by the carbon foam of the tool body. A void volume between such opposing tool faces may be filled with composite forming materials. After curing of these materials, the shape of the resultant composite part will duplicate that of the void volume between the male and female tool faces. It is also possible to have a single tool body having at least one surface providing a tool face or one surface of the walls of a cavity serving as a tool face(s). A cover may be incorporated in the tool body. Such a cover may be a flexible cover, where the cover may be comprised of a plastic, an elastomeric material, such as a silicon elastomer sheet or membrane, or other flexible sheet like material. The cover may be placed over the surface or cavity to form a closed volume. A vacuum may then be produced in the resultant closed volume. The force of the atmospheric pressure outside the closed volume then causes the cover to deform and contact the composite forming materials. This contact forces these materials against the surface or cavity walls. After curing of the composite forming materials, a composite part having the shape of the surface or the tool body cavity walls may be produced.

The composite forming materials that may be suitable for forming composite parts using the tools of the present invention include those materials known in the relevant arts. Suitable matrix materials include, but are not limited to, resins, prepregs, vinyl esters, adhesion films and coatings. Resins may comprise any family of thermoplastic or thermosetting resins and may be catalyzed. Other examples of suitable matrix materials are epoxy resins. Such resins are generally formed from low molecular weight diglicidyl ethers of bisphenol A. Depending on molecular weight, such resins may range from liquids to solid resins, and can be cured with amines, polyamides, anhydrides or other catalysts. Suitable solid resins may be modified with other resins and unsaturated fatty acids. Epoxy resins may be particularly suitable as they have good adhesion to fibers and because their thermal expansion can be tailored to match that of carbon foam based tooling when combined with certain fibers. In addition, their low viscosities are effective in wetting various reinforcing materials. More specifically, the resins suitable for use in manufacturing composite parts may comprise any combination of commercially available resins, for example, Dow 330, Gougeon WEST, Gougeon XR02-099-29A, ProSet 125, ProSet 135, ProSet 145, and MGS. Also, commercially available resins used in the tooling face materials may comprise, for example, PTM&W HT2C, AirTech Toolmaster 2001, JD Lincoln L-956, and Vantico RP 4005. Additionally, composite parts may be produced in the tooling of the present invention using vinyl esters. The matrix materials useful in the present invention may also encompass catalysts, hardeners, and other curing agents used to initiate polymerization or hardening of the matrix material system. For the purposes of this specification, suitable matrix materials will herein be collectively referred to as resins.

Prepregs are also suitable for use as composite forming materials for the production of composite parts using the tooling of the present invention. Prepregs is an abbreviation of preimpregnated and includes those reinforcing materials that are combined with an uncured matrix material prior to placement on the tool face. Prepregs may comprise any combination of mat, fabric, nonwoven material and roving with resin. Typically, these are usually cured to the B-stage, ready for molding. Further examples of prepreg material include mixtures, such as, JD Lincoln L-526, epoxy/carbon mixtures, such as, JD Lincoln L-956, ACG, and AirTech Toolmaster, and epoxy/glass mixtures, such as, Bryte, and the like. Also, commercially available prepreg material used for tool face materials may comprise epoxy/carbon combinations, for example, JD Lincoln L-956, ACG, and AirTech Toolmaster.

Moreover, composite parts may be produced in the tooling of the present invention using adhesion films. Adhesion films are a thin, dry film of resin, usually a thermoset, used as an interleaf in the production of laminates such as plywood. Heat and pressure applied in the laminating process may cause the film to bond both layers together. Some commercially available adhesion films include, but are not limited to, JD Lincoln L-313 Epoxy, SIA - MA-562, and SIA - PL-7771 FR.

Reinforcing materials used in the composites produced in the tooling of the present invention may include any of those know in the relevant arts. Such materials may include, but are not limited to, carbons (including graphites), Kevlar, arimide, glass and the like in forms that include, for example, fibers, including unidirectional fibers and chopped fibers, woven materials, and non-woven materials, and cloth materials. Particulate reinforcements may also be used.

Reinforcing structures can also be added to the composite forming materials while these materials are positioned on the tool face. Such reinforcing structures may, for example, strengthen the resulting composite part and/or form the basis for attaching the composite part to result in an assembly. These reinforcing structures may include forms such as bars, tubes, sheets, screens, flats, plates, and the like, of any specific geometric configuration. Materials of which such reinforcing structures are composed may include essentially any solid material of appreciable strength having a suitable compatibility with both the composite forming materials and any associated curing conditions. Such materials may include metals, ceramics, plastics, wood, glass, previously cured composites, and the like. In practice, reinforcing structures may be immersed in, or placed against a surface of, the composite forming materials on the tool face. After curing of the composite forming materials, the reinforcing structures may be more firmly attached to the resulting composite part by the use of screws, clips, adhesives, and the like if so desired or required. Specifically, such reinforcing materials may have CTEs that are substantially similar or identical to that of the resultant composite part.

Various composite forming techniques may be used in conjunction with the tools of the present invention. These techniques are well know to those skilled in the associated arts and include, but are not limited to, hand lay up, automated lay up, hand spray up, automated spray up, resin transfer molding (RTM), and vacuum assisted resin transfer molding (VARTM). Additionally, any combination of such methods may also be used.

Resin transfer molding is a method by which liquid thermoset polymeric resins are transferred within a volume that may be confined, such as, for example, a cavity or a channel within or on a tool body or tool body surface. Reinforcements, such as chopped fibers, may be distributed within the resin prior to distribution. Alternatively, a fiber reinforcement may be positioned within the volume, particularly in the area of the volume defined by a tool face. RTM is typically practiced by transferring or injecting catalyzed resin, examples of which include polymers of epoxy, vinyl ester, methyl methacrylate, phenolic, and polyester into a volume of the tool a least partially defined by a tool face(s). The resins fill the volume and infuse into reinforcing materials which have been previously positioned within the volume. Care is exercised in this procedure to prevent the entrapment of gas bubbles as gas bubbles may weaken the resulting composite material. Typical reinforcements include fiberglass and carbon fibers.

A vacuum system may also be used to assist in the transfer of the resin in and through the tool volume. This process is called vacuum assisted resin transfer molding. With adequate provision, a vacuum system may be utilized in many composite forming processes. It should be noted that for purposes of this specification, a vacuum system is a system capable of reducing the internal gaseous pressure of a closed volume, connected to the vacuum system, to pressures significantly below ambient atmospheric pressure. That is, a vacuum system will evacuate an enclosure, including a closed volume. Vacuum systems typically consist of a vacuum pump and associated connecting tubing or pipe.

Additionally, the extraction of air from the composite forming materials, during forming of the composite part, by use of a vacuum system may help insure the dimensional and structural accuracy and precision of the formed composite part. That is, such air extraction can reduce, or even eliminate, the formation of air bubbles in the resulting composite part. Such bubble elimination can result in stronger composite parts. Air extraction is usually practiced by producing at least a partial vacuum in a closed volume containing the composite forming materials. Additionally, the production of a vacuum in such a closed volume, if that volume is defined by at least one flexible wall or cover, can result in the composite material being compressed, usually by design, against the tool face by the action of the environmental atmospheric pressure on the flexible wall or cover.

More specifically, the closed volume may be formed, for example, by closing, and sealing, openings, ports and/or borders which have access to the volume. This may be accomplished with a vacuum bag, including, for example, a sheet of flexible material, a bleeder cloth and a release film placed over and/or below the lay up of composite material on the tool, and the edges of the sheet, which are sealed to create a closed volume. A vacuum system is connected to the closed volume which contains the bleeder cloth, release film, and the lay up of the composite material. The entrapped air is mechanically worked out of the lay up of composite material and is removed by the vacuum system. The composite part is then cured over time under controlled temperature and pressure conditions. Depending on the material for forming the composite part and/or the characteristics of the final product, the material for forming the composite part may be cured, at temperatures ranging from about ambient temperature to about 400 °F and vacuum pressures ranging from about 0 to about 28 in Hg. These ranges are dependent on the type of resins used. That is, any suitable temperature and/or pressure may be used.

Carbon foam may also be incorporated into existing composite tools to provide the benefits of the present invention. Such incorporation may be to up grade, effect repair, or to otherwise provide for any benefit of the present invention. Such incorporation is fully embodied within the scope of the present invention.

An embodiment of the present invention is related to a tool body comprised at least in part of carbon foam. A surface of the carbon foam, comprising a least a portion of the tool body, supports a tool face material. A surface of the tool face material, which in this embodiment is a carbon fiber composite, defines a tool face. The carbon foam is prepared or selected such that the CTE of the carbon foam is substantially similar or equivalent to that of the cured composites which will be formed by the tool. In use, the tool face is coated with a release agent. Carbon composite forming materials are then placed on the tool face to provide essentially uniform coverage of the tool face. The composite forming materials may be pressed against the tool face. The composite forming materials are then cured at an elevated temperature to provide a carbon fiber composite, which is then removed from the tool.

Reference will now be made in detail to other embodiments of the present invention, examples of which are illustrated in the accompanying drawings. Various aspects of these embodiments can be combined under the teachings of the present invention to provide additional examples which are not specifically laid forth. Therefore these embodiments are intended to be only illustrative of the present invention and are not to be considered limiting of that invention.

Figure 1 illustrates a first exemplary embodiment of a tool and a system for fabricating at least one composite part, according to this invention. This tool utilizes a mandrel like tool body to form a composite part.

Figure 1 illustrates a cross-sectional representation of a reusable tool which comprises a mandrel 100 which rotates on an included shaft 110 in a counter clockwise direction as indicated by the arrow in Figure 1. The mandrel comprises carbon foam 120. The outer surface of the carbon foam is coated with a tool face material 130 as shown in this example. The tool face material may be a carbon composite. Alternatively, the carbon foam cells, minimally those cells on the carbon foam surface, may be filled with a filling material. The outer surface of the mandrel is the tool face 140. The tool face 140 is preferably coated with a release agent. A bundle of longitudinally arranged fibers 150, of appreciable length, is directed to tangently contact the rotating mandrel 100 such that the fibers are drawn (i.e. wrapped), typically under tension, around the circumference of the rotating mandrel. The fibers may be any of the types known to be effective composite reinforcing materials. Such fibers may be composed of, for example, glass or carbon. The fibers are infused with a resin prior to, during, and/or after contacting of the mandrel. Alternatively, a longitudinally arranged fiber prepreg may be used as the fiber bundle. The prepreg or resin infused fiber bundle is drawn around the circumference of the mandrel until the desired thickness of prepreg or resin infused fibers is obtained. Typically, the tangental contact of the fiber bundle with the mandrel is moved parallel to the axis of rotation of the mandrel such that the fiber prepreg or resin infused fibers are positioned uniformly along the length of the mandrel. Once the desired thickness of prepreg or resin infused fibers is obtained the fiber is no longer supplied to the mandrel and the mandrel rotation is stopped. The prepreg or resin infused fiber coating on the mandrel is then cured. Heating of the infused fiber coating on the mandrel is preferred or required for some prepregs and resins to effect curing. Heating may be accomplished by use of an autoclave, oven, individual heating elements, and/or other like heating devices. Individual heating elements can be external to or internal to (i.e. embedded within) the tool body. Once cured, the resin infused fiber coating constitutes a composite part. The composite part can then be removed from the mandrel. When heat is used to cure the composite, the relative CTE values of the mandrel and composite become important. If the CTE of the composite part is less than or essentially equivalent to that of the mandrel, the composite part may be easily removed form the mandrel. But, the inner dimension of the composite part may be greater than that of the outer diameter of the non-heated mandrel. If the CTE of the composite part is greater than that of the mandrel, the component part may be "locked" on the mandrel with separation from the mandrel without damage being difficult if not impossible.

It should be noted the mandrel does not have to rotate as shown in this embodiment. For example, the mandrel may rotate in a clockwise direction. Alternatively, the mandrel may be stationary while the prepreg or resin infused fiber bundle is directed such that it is wrapped around the outer circumference of the stationary mandrel.

Figure 2 illustrates a second tool and a system for fabricating at least one composite part, which is not according to this invention.

Figure 2 illustrates a cross-sectional representation of a reusable tool which comprises a tool body 200 comprised at least in part of carbon foam. A surface of the carbon foam incorporated into the tool body has been machined or otherwise contoured or formed to a desired configuration and serves as the tool face 210. This tool face extends along the surface of the carbon foam from 210-A to 210-B. This tool face surface is covered with a non-permeable parting sheet 220. The parting sheet covers not only the tool face but also surfaces neighboring the tool face so as to prevent unwanted contact of other tool surfaces with composite forming materials. Composite forming materials 230 are placed on the parting sheet covering the tool face. These composite forming materials are positioned, mechanically or manually, over the area of the parting sheet covering the tool face such that an essentially uniform distribution of these materials is obtained. The composite forming materials are also pressed against the parting sheet covering the tool face. This pressing is performed to insure the composite forming materials conform to the configuration of the tool face. Also, as the tool face is unfilled carbon foam, it will impart some type of patterning, representative of the unfilled carbon foam cells on the tool face, to the tool face defined surface of the composite part.

The composite forming materials are then cured to produce a composite part having the form imparted by the tool face. Heating of the composite forming materials is preferred or required for some composite forming materials to effect curing. Heating may be accomplished by use of an autoclave, oven, individual heating elements, and/or other like heating devices. Individual heating elements can be external to, or internal to (i.e. embedded within), the tool body. As was discussed previously, heating will effect changes in the dimensions of all the heated materials. The magnitudes of such dimensional changes are dependent on the CTEs of the individual materials. For this, and all the examples included in this specification, the CTE of the tool face and of the resultant composite part are preferably similar or essentially identical, such as would be the case if the resultant composite part was a CFC. If the CTE of the composite part is not similar or essentially identical to that of the tool face, the size of the composite part may not confirm to the desired critical dimensions. Additionally, if the CTE is greater than that of the tool face, the component part may become "locked" on the tool face with separation from the tool face without damage to the tool face or composite part being difficult if not impossible.

This example can be modified in a number of ways. In accordance to the invention, the tool face may be a surface of a tool face material supported by the carbon foam. Or, the cells of the carbon foam tool face may be filled completely with a filling material. For both modifications, it may be possible to replace the parting sheet with a release agent. Other modifications will be apparent to those skilled in the associated arts.

Figure 3 illustrates a third exemplary embodiment of a tool according to this invention.

Figure 3 illustrates a cross-sectional representation of a reusable tool which comprises a tool body 300 comprised at least in part of carbon foam. A surface of the carbon foam incorporated in the tool body supports an essentially gas impermeable tool face material 310. A section of the exposed surface of the tool face material is contoured or otherwise shaped to a desired configuration to provide a tool face 320. The tool face extends from 320-A to 320-B. Tool body surfaces near to the tool face 330 are also surfaced with gas impermeable tool face material. A gas impermeable cover 340 encloses the tool face, tool body surfaces near the tool face, and the composite forming materials 350. The cover may be made of a flexible material, such as, for example, plastic or of a rigid material, such as, for example, carbonaceous foam, metal, and the like.

If carbon foam is used as a cover, minimally the surface(s) of the carbon foam expected to contact the composite forming materials may be coated with a tool face material, a cell filling material, or a parting sheet. That is, the use of carbon foam as a cover may be practiced in much the same way as when carbon foam is incorporated into a tool body as described by the present invention. Coating of a carbon foam cover is required if that cover is to be impermeable to the passage of gases. Additionally, any rigid materials used as a cover may be contoured, formed, or otherwise shaped on the surface expected to contact the composite forming material to form a tool face on the opposite side of the composite forming materials from that tool face of the tool body. This second tool face will then shape a surface of the composite forming materials. This surface will be on the opposite side of the resulting composite part than that surface produced by the tool face of the tool body. Parting sheets and release agents may be applied to any surfaces, especially those expected to be contacted by composite forming materials.

The intersection of the tool body and the cover forms an opening 355 around the entire perimeter of the intersection. This opening may be sealed with various materials 360 as required to produce an air or gas impermeable boundary. Suitable materials are those that will provide for the contacting of the cover with the composite materials while still providing for a sealing action. For example, the opening may be sealed with tape, gasket material, weather striping, sealant, and the like. A connection port 370 is located on the tool body cover (as shown in Figure 3), or opening such that this connection port accesses the volume defined by the tool body, tool face, cover, and any opening sealing materials. A vacuum system 380 is connected to this connection port.

If the opening and connection port are sealed or otherwise closed, the composite forming materials on the tool face are therefore contained within a closed volume 390. This closed volume may be essentially hermetically sealed as the surfaces of the tool body and cover, and the opening between the tool body and cover are sealed or otherwise made impermeable to the passage of gases.

In use, the composite forming materials are positioned on the tool face and the opening between the tool body and the cover is sealed except for the connection port. Operation of the vacuum system removes air from the closed volume and the composite forming materials contained within the closed volume. Operation of the vacuum system also causes the cover to be pushed to the outer boundary of the composite forming materials by the action of the local atmospheric pressure. The cover then presses these materials against the tool face. Also, if the cover is made of a rigid material, the shape of the cover influences the shape of the surface(s) of the composite part adjacent to an inner surface of the cover. That is, a rigid cover can function as a second tool face.

The composite forming materials are then cured to produce a composite part having the form imparted by the tool face. Heating of the composite forming materials is preferred or required for some composite forming materials to effect curing. The tool and cover assembly may be placed in an autoclave to apply additional pressure to the cover and/or to heat the composite forming materials to effect curing. Other devices such as an oven, and/or individual heating elements may be used to apply heat to the materials contained within the closed volume in order to cure the composite forming materials contained therein to result in the composite part. If desired, individual heating elements may be embedded within the tool body. Depending on the properties of the resin used to form the composite, room or ambient temperature, for example, may be sufficient to cure the materials for forming the composite part.

As was discussed previously, heating will effect changes in the dimensions of all the heated materials. The magnitudes of such dimensional changes are dependent on the CTEs of the individual materials. Preferably, the CTE of the tool face and the resultant composite part are substantially similar or equivalent, such as would be the case if the resultant composite part and the tool face material were CFC.

Figure 4 illustrates a fourth exemplary embodiment of a system according to this invention.

Figure 4 illustrates a cross-sectional representation of a reusable tool which comprises a tool body 400 comprised at least in part of carbon foam. A surface of the carbon foam incorporated in the tool body supports an impermeable tool face material 405. A section of the exposed surface of the tool face material is contoured or otherwise shaped to a desired configuration to provide a tool face 410. The tool face extends from 410-A to 410-B. Tool body surfaces near to the tool face 415 are also surfaced with impermeable tool face material. A cover 420 encloses the tool face, tool body surfaces near the tool face, and the composite reinforcing materials 425. The composite reinforcing materials may be fibers. The cover may be made of a flexible material, such as, for example, plastic or of a rigid material, such as, for example, carbonaceous foam, metal, and the like.

If carbon foam is used as a cover, the surface(s) of the carbon foam expected to contact the composite forming materials may be coated with a tool face material, a cell filling material, or a parting sheet. That is, the use of carbon foam as a cover may be practiced in much the same way as when carbon foam is incorporated into a tool body as described by the present invention. Coating of a carbon foam cover is required if the cover is to be impermeable to the passage of gases. Additionally, any rigid materials used as a cover may be contoured, formed, or otherwise shaped on the surface expected to contact the composite forming material to form a tool face on the opposite side of the composite forming materials from that tool face of the tool body. This second tool face will then shape a surface of the composite forming materials. This surface will be on the opposite side of the resulting composite part than that surface produced by the tool face of the tool body. Parting sheets and release agents may be applied to any surfaces, especially those expected to be contacted by composite forming materials.

The intersection of the tool body and the cover forms an opening 430 around the entire perimeter of the intersection. This opening may be sealed with various materials 435 as required to produce an air or gas impermeable boundary. Suitable materials are those that will provide for the contacting of the cover with the composite materials while still providing for a sealing action. For example, the opening may be sealed with tape, gasket material, weather striping, sealant, and the like. A first connection port 440 is located on the cover (as shown in this example), or opening 430 such that this connection port accesses the volume defined by the tool body, tool face, cover, and any opening sealing materials. Multiple first connection ports may be used. A vacuum system 445 is connected to the first connection port(s). A second connection port 450 is located on the cover (as shown in this example), or opening 430 such that this connection port accesses the volume defined by the tool body, tool face, cover, and any opening sealing materials. A resin reservoir 455, vented to the atmosphere, is connected to the second connection port.

If the opening and connection ports are sealed or otherwise closed, the composite forming materials on the tool face are therefore contained within a closed volume 460. This closed volume may be essentially hermetically sealed as the surfaces of the tool body and cover, and the opening between the tool body and cover are sealed or otherwise made impermeable to the passage of gases.

In use, the composite reinforcing materials are positioned on the tool face and the opening between the tool body and the cover is sealed except for the connection ports. Operation of the vacuum system removes air from the closed volume and the composite reinforcing materials contained within the closed volume. Operation of the vacuum system also causes the cover to be pushed to the outer boundary of the composite reinforcing materials by the action of the local atmospheric pressure. The cover then presses these materials against the tool face. Also, if the cover is made of a rigid material, the shape of the cover influences the shape of the surface(s) of the composite part adjacent to an inner surface of the cover.

Operation of the vacuum system also causes the resin in the resin reservoir to be transferred from the reservoir to the closed volume. Optionally, a pump may be used to assist in resin transfer. The resin in the closed volume then infuses the composite reinforcing material to result in the production of a composite forming material. The second connection port is closed once a sufficient quantity of resin to form the desired composite composition with the reinforcing material has been transferred to the closed volume.

Once infusion of the reinforcing material with resin is complete, the composite forming materials are then cured to produce a composite part having the form imparted by the tool face. Heating of the composite forming materials is preferred or required for some composite forming materials to effect curing. The tool and cover assembly may be placed in an autoclave to apply additional pressure to the cover and/or to heat the composite forming materials to effect curing. Resin transfer may also be practiced in an autoclave. Other devices such as an oven, and/or individual heating elements may be used to apply heat to the materials contained within the closed volume in order to cure the composite forming materials contained therein to result in the composite part. If desired, individual heating elements may be embedded within the tool body. Depending on the properties of the resin used to form the composite, room or ambient temperature, for example, may be sufficient to cure the materials for forming the composite part.

As was discussed previously, heating will effect changes in the dimensions of all the heated materials. The magnitudes of such dimensional changes are dependent on the CTEs of the individual materials. In particular, the CTE of the tool face and the resultant composite part are substantially similar or equivalent, such as would be the case if the resultant composite part and the tool face material were CFC.

The tooling discussed in this illustrative example can be classified by those skilled in the associated arts as an example of VARTM (Vacuum Assisted Resin Transfer Molding). Slight modifications to the teachings in this example would then make the example illustrative of RTM (Resin Transfer Molding). These modifications are elimination of the vacuum system and venting of the closed volume. Venting of the closed volume may be by use of an open connection port or by not sealing the opening between the cover and tool body.

In RTM, the composite reinforcing materials are positioned on the tool face.

The resin in the resin reservoir is then transferred, usually by the action of a pump, from the reservoir to the vented closed volume. The resin in the closed volume then infuses into the composite reinforcing material to result in the production of a composite forming material. The second connection port is closed once sufficient resin has been transferred to the closed volume and/or reinforcing material.

Figure 5 illustrates a fifth exemplary embodiment of a system according to this invention.

Figure 5 illustrates a cross-sectional representation of a reusable tool which comprises a tool body 500 comprised at least in part of carbon foam. This tool body is divided into two sections, a top section 500-A and a bottom section 500-B. Although not illustrated in this example, more than two sections could be utilized in a single tool body. Surfaces of these sections closely contact each other across a mutual surface, which will be referred to as a parting surface 505. A portion of the parting surface of each section is machined, contoured, molded, or otherwise shaped to provide a tool face 510 of the desired dimensions. The tool faces of each section are positioned on the parting surfaces such that a volume 515 is defined having the shape and dimensions of the composite part planned for production in the tool. Additionally, the tool faces are positioned on the parting surfaces such that the parting surfaces of each section contact each other around the perimeter of the tool faces. The area of contact of the parting surfaces may be sealed as desired or required with various materials including tape, gasket material, weather striping, sealant, and the like. In this example, the tool face of the top tool section extends from 520-A to 520-B. The tool face of the bottom tool section extends from 520-C to 520-D

For each section, a surface of the carbon foam incorporated in the tool body supports a tool face material 525. This tool face material forms the surface of the tool faces and preferably the parting surface of each section. Preferably this tool face material is a carbon fiber composite. Alternatively, a surface of the carbon foam of the top and bottom tool body sections may serve as the tool faces and/or parting surfaces. The cells of this carbon foam may be partially or completely filled. Parting sheets and release compounds may be used as desired and appropriate. These methods may be used alone of in combination.

Shafts connect the volume defined by the tool faces to the exterior of the tool body. Vent shafts 530 connect the uppermost section(s) of the volume to the atmosphere. This type of shaft(s) is most conveniently formed in the top tool body. Another shaft(s) 535 is connected to a reservoir(s) 540 which contains a resin. This type of shaft(s) is connected to the lower most section(s) of the volume.

In use, the composite reinforcing materials are positioned in the volume defined by the tool faces. Resin is then introduced into the volume, usually by action of a pump, from the attached reservoir. Resin fills the volume and infiltrates the reinforcing materials. Introduction of the resin is stopped when resin enters the shaft(s) connecting the volume to the atmosphere.

The composite forming materials are then cured to produce a composite part having the form imparted by the tool faces. Heating of the composite forming materials is preferred or required for some composite forming materials to effect curing. Heating may be accomplished by use of an autoclave, oven, individual heating elements, and/or other like heating devices. Individual heating elements can be external to, or internal to (i.e. embedded within), the tool body. As was discussed previously, heating will effect changes in the dimensions of all the heated materials. The magnitudes of such dimensional changes are dependent on the CTEs of the individual materials. Specifically, the CTE of the tool face and the resultant composite part are similar or essentially identical, such as would be the case if the resultant composite part and the tool face material were CFC.

The tooling discussed in this illustrative example can be classified by those skilled in the associated arts as an example of RTM (Resin Transfer Molding). Slight modifications to the teachings in this example would then make the example illustrative of VARTM (Vacuum Assisted Resin Transfer Molding). These modifications are the connection of the vent shaft(s) to a vacuum system rather than to the atmosphere. It may also be necessary to more thoroughly seal the tool faces, parting surfaces, and/or the area of contact of the parting surfaces such that they are impermeable to gases.

Figure 6 illustrates a sixth exemplary embodiment of a system according to this invention.

Figure 6 illustrates a cross-sectional representation of a reusable tool which comprises a tool body 600 comprised at least in part of carbon foam. A surface of the carbon foam incorporated in the tool body is contoured or otherwise shaped to a desired configuration to provide a tool face 605. In Figure 6, the tool face extends from 605-A to 605-B. The cells of the carbon foam incorporating this tool face may be partially filled such that the tool face is remains permeable to the passage of gases. Alternatively, the carbon foam supports a gas permeable tool face material. A section of the exposed surface of the tool face material is contoured or otherwise shaped to a desired configuration to provide a tool face. The outer tool body surface area, excepting the tool face and a connection area 610, are sealed with a gas impermeable material 615. A first connection port 620 is fitted to the connection area. This connection port is connected to a vacuum system 625.

The surface 630 of the tool body immediately surrounding the tool face is fitted with two frames, a top fame 635 and a bottom frame 640. Each frame holds an elastomeric gas impermeable membrane. The top frame holds the top membrane 645. The bottom frame holds the bottom membrane 650. The frames are equivalently sized and are stacked such that a first closed volume 655 is formed between the membranes. Also, the stacked frames are positioned on the surface of the tool body immediately surrounding the tool face so as to form a second closed volume 660 between the tool face and the bottom membrane. These closed volumes may be sealed against unplanned gas transfer in and out of these volumes by the application of sealants 665 between the frames and between the bottom frame and the surface of the tool body immediately surrounding the tool face. Sealants may include various materials including tape, gasket material, weather striping, sealant, and the like. A second connection port 670 is located between the frames, or alternatively, in the top membrane such that it provides communication between a second vacuum source 675 and the first closed volume.

In use, composite forming materials 680 are positioned in the first closed volume. Operation of the vacuum system(s) removes air from the first closed volume and the second closed volume. It should be noted that the air removed from the second closed volume is drawn through the tool body to the first connection port and from there to the vacuum system. The resulting vacuum in the first closed volume removes air from the composite forming materials. The resulting vacuum in the second closed volume causes the elastomeric membranes to flex such that the composite forming materials are pushed and positioned against the tool face by the action of the ambient atmospheric pressure on the top membrane.

The composite forming materials are then cured to produce a composite part having the form imparted by the tool face. Heating of the composite forming materials is preferred or required for some composite forming materials to effect curing. The tool may be placed in an autoclave to apply additional pressure to the composite forming materials and to heat those materials to effect curing. Other devices such as an oven, and/or individual heating elements may be used to apply heat to the materials contained within the closed volume in order to cure the composite forming materials contained therein to result in the composite part. If desired, individual heating elements may be embedded within the tool body. Depending on the properties of the resin used to form the composite, room or ambient temperature, for example, may be sufficient to cure the materials for forming the composite part.

As discussed above, heating will effect changes in the dimensions of all the heated materials. The magnitudes of such dimensional changes are dependent on the CTEs of the individual materials. Specifically, the CTE of the tool face and the resultant composite part are similar or essentially identical, such as would be the case if the resultant composite part and the tool face material were CFC.

Figure 7 illustrates a seventh exemplary embodiment of a system according to this invention.

Figure 7 illustrates a three dimensional representation of a first half of a reusable tool body comprised at least in part of carbon foam. This portion of the tool body 700 consists of carbon foam having a parting surface 705 into which is machined, shaped, molded or otherwise formed a shape 710. In this representation, that shape is a hemisphere. A channel 715 is also machined, shaped, molded or otherwise formed into the parting surface of the carbon foam. This channel traverses the parting surface of the tool body portion from the shape to an outer edge of that surface.

The second half of the reusable tool body (not shown) has a parting surface. This second half may also have a channel and a shape machined, shaped, molded or otherwise formed into the parting surface. This channel and shape of the second half may mirror those of first half. The parting surface of the second half may be constructed such that it is a dimensional mirror image of the parting surface of the first half. As such, a close fit can be obtained when the parting surfaces of the first and second half are brought together. In particular, the second half may be constructed such that a channel, if present, traverses the surface to an edge that is essentially the mirror image of that edge contacted by the channel of the first half.

The form imparted to the tool body halves by the channel(s) and shape(s) constitutes a tool face. These tool faces may have any form providing a line can be drawn from a plane parallel to the parting surface to every portion of the tool face. Tool face material is layered over the carbon foam to provide a tool face. These tool face materials may be any of those known in the associated arts including carbon fiber composites.

In use, the two tool body halves are joined together at the parting faces. Indexing pins or witness marks may be used to insure proper alignment of the two halves. Various methods may be used to maintain contact of the parting surfaces. Such methods include, but are not limited to clamping, bolting, and strapping. Composite forming materials such as resins containing particulate or short fiber reinforcements may then be poured into the channel(s). The composite forming materials are transported through the channel to the volume defined by the tool face shape. Alternatively, the volume defined by the tool face shape may contain a composite reinforcement material, such as fibers. Resin introduced into the channel would then infuse this composite reinforcement material to result in a composite forming material. If desired, the tool body can be turned and/or rotated such that the composite forming material uniformly coats the tool face.

It is also possible to fill the shapes in the tool body halves with composite reinforcing materials prior to joining the halves at the parting faces. Once joined, resin can be poured into the channel(s). The resin is then transported by the action of gravity to the volume defined by the tool face shape. Alternatively, the resin can be pumped into the volume defined by the tool face shape. In this volume, the resin infuses the reinforcing materials resulting in the formation of a composite forming material.

The composite forming materials are then cured to produce a composite part having the form imparted by the tool face. Heating of the composite forming materials is preferred or required for some composite forming materials to effect curing. The tool may be placed in an autoclave to apply additional pressure to the composite forming materials and to heat those materials to effect curing. Other devices such as an oven, and/or individual heating elements may be used to apply heat to the materials contained within the tool volume in order to cure the composite forming materials contained therein to result in the composite part. If desired, individual heating elements may be embedded within the tool body. Depending on the properties of the resin used to form the composite, room or ambient temperature, for example, may be sufficient to cure the materials for forming the composite part.

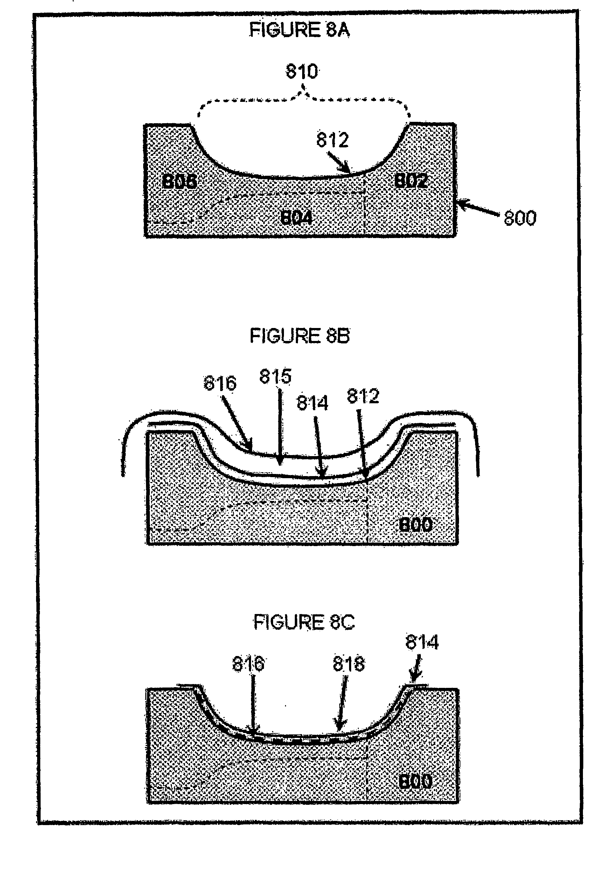

Figures 8A, 8B, and 8C illustrate an eight exemplary embodiment of a system according to this invention.

Figures 8A, 8B, and 8C illustrate the preparation of a reusable tool body of a composite tool according to the present invention. Referring to Figure 8A, a carbon foam block 800 is illustrated. The carbon foam block will comprise at least a portion of a tool body. The carbon foam block may be formed into any desired geometry. Additionally, this carbon foam block may be composed of two or more individual carbon foam blocks. In this illustrative example, three carbonaceous foam blocks 802, 804, and 806 are joined together with an adhesive material, or the like, in order to form the carbon foam block 800 of the tool body. The adhesive material used to join the individual carbon foam blocks may be, for example, an adhesive film, a resin, and the like. More specifically, commercially available adhesive materials may be used. For example, Graphi Bond 551, Expando and/or refractory cement may be used. In particular, the various carbon foam blocks 802, 804, and 806 are prepared such that they have a substantially similar or identical CTE. Alternately, a single carbon foam block may used to form the tool body 800.

A surface of the carbon foam block 800 is then shaped into a desired geometry 810. For example, a surface 812 of the carbon foam block 800 is machined to a predetermined geometry. Typically, the dimensions of the shaped surface of the carbon block are adjusted for the dimensions of a tool face material, in this example a formed laminate, which will eventually define the tool face. That is, the shaping may be conducted to a slightly larger profile than if no tool face material was planned for use.

Referring to Figure 8B, after shaping, a laminate 814 of resin and reinforcing materials is arranged on the shaped surface 812 of the carbon foam block 800. The laminate will constitute a tool face material. The materials used for forming the laminate are selected such that the CTE of the resulting cured laminate and the carbon foam block 800 are identical namely equivalent. The surface of the laminate 814, opposite the carbon foam block, will serve as the tool face of the tool body once curing of the laminate is complete. Therefore the laminate 814 is formed to provide a surface having the dimensions of the desired tool face. In this embodiment of the present invention, the laminate 814 is a carbon fiber composite. In other embodiments of the present invention, any of the previously discussed tool face materials may be substituted for the laminate as long as the CTE of the tool face material and the carbon foam tool body are equivalent.

The laminate 814 is covered with a cover 816 connected to a vacuum system (not shown) such that the pressure in the volume 815 between the cover and the laminate 814 can be lowered. Sealing of the cover 816 to the laminate 814 and/or tooling body 800 may be necessary. In this manner the laminate is compressed against the shaped surface 812 of the carbon foam block 800 by the action of the localized environmental atmospheric pressure on the cover. The cover 816 may be a silicon membrane, elastomer bag, and the like. The laminate is then cured.

Referring to Figure 8C, the cured laminate 814 is temporarily removed form the carbon foam block 800. An adhesion paste 816 is applied on the surface of the carbonaceous foam block 800 in order to bond the interface between carbon foam block 800 and the laminate 814. The cured laminate 814 is then replaced on the carbon foam block. Once bonding is complete, the outer surface 818 of the laminate 814 is optionally machined and/or finished to a predetermined geometry and dimensions as necessary. The carbonaceous foam block 800 and cured laminate 814 assemblage now constitutes a tool body with the tool face being the outer surface of the laminate.

As discussed above, the tool face materials may be substituted for the laminate 814 in the tooling of the present invention. For example, an arc sprayed metal may be applied to the surface of the carbon foam block 800 to act as a tool face material and thus provide a tool face. Such a tool face material may be subsequently machined or otherwise formed to precisely the desired geometry by conventional metal fabrication techniques. Additionally, a resin or other tool face material may be applied onto the carbon foam block 800 in place of the laminate. In this configuration, the resin is applied to the surface 812 of the carbonaceous foam block 800 and allowed to cure. Next, the resin is milled or otherwise shaped to the desired geometry to obtain a tooling face ready to be used in the production of composite parts.

If desired, scribe lines, cross-hatching, patterns, and the like may be incorporated into the tool faces provided by any of the forgoing methods. These patterns, and the like, will eventually be incorporated in the tooling parts formed with the tooling body.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A tool for the production of at least one composite part, the tool comprising a carbon foam tool body (400) and said carbon foam tool body (400) supports a tool face material (405), **characterized in that** the coefficient of thermal expansion of the tool face material (405) and the carbon foam tool body (400) are equivalent.

2. The tool of claim 1 wherein at least a portion of cells of the carbon foam are at least partially filled with a filling material.

3. The tool of claim 2 wherein the filling material is at least one of a cured resin, a pitch, a cured moldable ceramic, a carbonized resin, or a carbonized pitch.

4. The tool of claim 1, wherein the coefficient of thermal expansion of the tool face (410) is substantially similar to the coefficient of thermal expansion of a composite part produced on the tool face (410).

5. The tool of claim 1, wherein the tool face material (405) is selected from the group consisting of metals and ceramics.

6. The tool of claim 1, wherein the tool face material (405) is selected from the group consisting of a cured resin, a fiber composite, a carbon fiber composite, a particulate composite, INVAR^{®}, silicon carbide, and zirconia ceramics.

7. The tool of claim 1, wherein the carbon foam is derived at least in part from pitch, coal, or a coal derivative.

8. The tool of claim 1, wherein the tool body (400) is mandrel shaped.

9. The tool of claim 1, further comprising a cover (420) positioned at least partially over the tool face (410) and enclosing at least a portion of the tool face (410).

10. The tool of claim 9, further comprising a resin reservoir connection port (440, 450) in vacuum communication with the enclosed portion of the tool face, wherein the resin reservoir connection port (440, 450) is adapted to be connected to a resin reservoir system (455) and provides for resin transfer from the resin reservoir system (450) to the enclosed portion of the tool face when a vacuum is created in the enclosed portion of the tool face.

11. A method for producing at least one composite part, comprising the steps of:
providing a carbon foam tool body (400) having a tool face (410) and said tool face (410) comprises a tool face material (405);
placing composite forming material on the tool face; and
curing the composite forming material thereby producing the composite part, **characterised in that** the coefficient of thermal expansion of the tool face material (405), the carbon foam tool body (400) and composite forming material are equivalent.

12. The method of claim 11, wherein the composite forming material is a mixture of a resin and at least one selected from the group consisting of a particulate reinforcing material and a fibrous reinforcing material.

13. The method of claim 11, further comprising the step of placing a parting film between the composite forming materials and the tool face.

14. The method of claim 11, further comprising the step of coating at least a portion of the tool face (410) with a release agent prior to contacting the tool face (410) with the composite forming material (425).

15. The method of claim 11, wherein the tool face material (405) is selected from the group consisting of metals and ceramics.

16. The method of claim 11, wherein the tool face material (405) is selected from the group consisting of a cured resin, a fiber composite, a carbon fiber composite, a particulate composite, INVAR^{®}, silicon carbide, and zirconia ceramics INVAR^{®}, silicon carbide, and zirconia ceramics.

17. The method of claim 11, wherein the tool further comprises a cover (420) positioned over at least a part of the tool face (410) and enclosing at least a portion of the tool face, and wherein the composite forming material (425) is placed on the enclosed portion of the tool face, and further comprising the step of producing a vacuum within the enclosed portion of the tool face.

## Patentansprüche

1. Werkzeug zur Herstellung von zumindest einem Kompositteil, das Werkzeug umfasst einen Werkzeugkörper aus Kohlenstoffschaum (400) und dieser Werkzeugkörper aus Kohlenstoffschaum (400) trägt ein Werkzeugoberflächenmaterial (405), **dadurch gekennzeichnet, dass** der Wärmeausdehnungskoeffizient des Werkzeugoberflächenmaterials (405) und des Kohlenstoffschaumes des Werkzeugskörpers (400) äquivalent sind.

2. Werkzeug nach Anspruch 1, wobei mindestens ein Teil der Zellen des Kohlenstoffschaums mindestens teilweise mit einem Füllmaterial gefüllt sind.

3. Werkzeug nach Anspruch 2, wobei das Füllmaterial mindestens eines ist aus einem gehärteten Harz, Teer, gehärtete formbare Keramik, karbonisiertes Harz, oder karbonisiertes Teer.

4. Werkzeug nach Anspruch 1, wobei der Wärmeausdehnungskoeffizient der Werkzeugoberfläche (410) im Wesentlichen gleich zu dem Wärmeausdehnungskoeffizienten des Kompositteils hergestellt auf der Werkzeugoberfläche (410) ist.

5. Werkzeug nach Anspruch 1, wobei das Werkzeugoberflächenmaterial (405) ausgewählt ist aus der Gruppe bestehend aus Metallen und Keramiken.

6. Werkzeug nach Anspruch 1, wobei das Werkzeugoberflächenmaterial (405) ausgewählt ist aus der Gruppe bestehend aus einem gehärteten Harz, aus einem Faserkomposit, einem Kohlenstofffaserkomposits, einem partikulären Komposit, INVAR^{®}, Siliziumkarbid, und Zirkoniumoxid-Keramiken.

7. Werkzeug nach Anspruch 1, wobei der Kohlenstoffschaum zumindest teilweise aus Teer, Kohle oder einem Kohlederivat stammt.

8. Werkzeug nach Anspruch 1, wobei der Werkzeugkörper (400) dornenförmig ausgebildet ist.

9. Werkzeug nach Anspruch 1, weiter umfassend eine Abdeckung (420), die zumindest teilweise über die Werkzeugoberfläche (410) positioniert ist und mindestens einen Teil der Werkzeugoberfläche (410) umschließt.

10. Werkzeug nach Anspruch 9, weiter umfassend einen Verbindungsanschluss für ein Harzreservoir (440, 450), das in einer Vakuumverbindung mit dem umschlossenen Teilen der Werkzeugoberfläche steht, wobei der Verbindungsanschluss für das Harzreservoir (440, 450) angepasst ist, um mit einem Harzreservoirsystem (455) verbunden zu werden und den Transfer des Harzes aus dem Harzreservoirsystem (450) zu dem umschlossenen Bereich der Werkzeugoberfläche erlaubt, wenn ein Vakuum in dem umschlossenen Bereich der Werkzeugoberfläche angelegt wird.

11. Verfahren zur Herstellung mindestens eines Kompositteils umfassend die Schritte:
Bereitstellen eines Werkzeugkörpers aus Kohlenstoffschaum (400) mit einer Werkzeugoberfläche, (410) und diese Werkzeugoberfläche (410) umfasst ein Werkzeugoberflächenmaterial (405);
Platzieren von kompositausbildendem Material auf die Werkzeugoberfläche; und
Aushärten des kompositausbildenden Materials zur Herstellung des Kompositteils, **dadurch gekennzeichnet, dass** der Wärmeausdehnungskoeffizient des Werkzeugoberflächenmaterials (405), des Kohlenstoffschaums eines Werkzeugkörpers (400) und des kompositausbildenden Materials äquivalent sind.

12. Verfahren nach Anspruch 11, wobei das kompositausbildende Material eine Mischung aus einem Harz und mindestens einem ausgewählt aus der Gruppe bestehend aus partikulärem verstärkendem Material und einem fasrigen verstärkendem Material ist.

13. Verfahren nach Anspruch 11, weiterhin umfassend den Schritt des Platzierens eines Trennfilms zwischen den kompositausbildenden Materialien und der Werkstoffoberfläche.

14. Verfahren nach Anspruch 11 weiter umfassend den Schritt des Beschichtens mindestens eines Teils der Werkzeugoberfläche (410) mit einem Trennmittel vor dem Inkontaktbringen der Werkzeugoberfläche (410) mit dem kompositausbildenden Material (425).

15. Verfahren nach Anspruch 11, wobei das Material der Werkzeugoberfläche (405) ausgewählt ist aus der Gruppe bestehend aus Metallen und Keramiken.

16. Verfahren nach Anspruch 11, wobei das Material der Werkzeugoberfläche (405) ausgewählt ist aus der Gruppe bestehend aus einem gehärteten Harz, aus einem Faserkomposit, einem Kohlenstofffaserkomposits, einem partikulären Komposit, INVAR^{®,} Siliziumkarbid, und Zirkoniumoxid-Keramiken.

17. Verfahren nach Anspruch 11, wobei das Werkzeug weiterhin umfasst eine Abdeckung (420) die zumindest teilweise über die Werkzeugoberfläche (410) positioniert ist und mindestens einen Teil der Werkzeugoberfläche (410) einschließt.

## Revendications

1. Outil pour la production d'au moins une pièce composite, l'outil comprenant un corps d'outil en mousse de carbone (400), et ledit corps d'outil en mousse de carbone (400) supportant un matériau de face de coupe (405), **caractérisé en ce que** les coefficients de dilatation thermique du matériau composant la face de coupe (405) et du corps d'outil en mousse de carbone (400) sont équivalents.

2. Outil selon la revendication 1, dans lequel au moins une partie de cellules de la mousse de carbone sont au moins partiellement remplies avec une matière de remplissage.

3. Outil selon la revendication 2, dans lequel la matière de remplissage est au moins soit une résine durcie, une poix, une céramique moulable durcie, une résine carbonisée ou une poix carbonisée.

4. Outil selon la revendication 1, dans lequel le coefficient de dilatation thermique de la face de coupe (410) est sensiblement similaire au coefficient de dilatation thermique d'une pièce composite qui est produite sur la face de coupe (410).

5. Outil selon la revendication 1, dans lequel le matériau composant la face de coupe (405) est sélectionné dans le groupe comprenant des métaux et des céramiques.

6. Outil selon la revendication 1, dans lequel le matériau composant la face de coupe (405) est sélectionné dans le groupe comprenant une résine durcie, un composite fibreux, un composite de fibre de carbone, un composite particulaire, l'Invar®, le carbure de silicium et des céramiques de zircone.

7. Outil selon la revendication 1, dans lequel la mousse de carbone est dérivée au moins en partie d'une poix, de charbon ou d'un dérivé du charbon.

8. Outil selon la revendication 1, dans lequel le corps d'outil (400) est en forme de mandrin.

9. Outil selon la revendication 1, comprenant en outre un élément de recouvrement (420) qui est positionné au moins partiellement sur la face de coupe (410) et qui enveloppe au moins une partie de la face de coupe (410).

10. Outil selon la revendication 9, comprenant en outre un port de connexion de réservoir de résine (440, 450) en communication sous vide avec la partie enveloppée de la face de coupe, dans lequel le port de connexion de réservoir de résine (440, 450) est adapté de manière à être connecté à un système de réservoir de résine (455) et réalise un transfert de résine entre le système de réservoir de résine (450) et la partie enveloppée de la face de coupe lorsqu'un vide est créé dans la partie enveloppée de la face de coupe.

11. Procédé pour produire au moins une pièce composite, comprenant les étapes suivantes:
former un corps d'outil en mousse de carbone (400) présentant une face de coupe (410), et ladite face de coupe (410) comprenant un matériau de face de coupe (405);
placer une matière de formation de composite sur la face de coupe; et
faire durcir la matière de formation de composite, produisant ainsi la pièce composite,
**caractérisé en ce que** les coefficients de dilatation thermique du matériau composant la face de coupe (405), du corps d'outil en mousse de carbone (400) et de la matière de formation de composite sont équivalents.

12. Procédé selon la revendication 11, dans lequel la matière de formation de composite est un mélange d'une résine et d'au moins une matière comprise dans le groupe comprenant une matière de renforcement particulaire et une matière de renforcement fibreuse.

13. Procédé selon la revendication 11, comprenant en outre l'étape qui consiste à placer un film de séparation entre les matières de formation de composite et la face de coupe.

14. Procédé selon la revendication 11, comprenant en outre l'étape qui consiste à revêtir au moins une partie de la face de coupe (410) d'un agent de démoulage avant la mise en contact de la face de coupe (410) avec la matière de formation de composite (425).

15. Procédé selon la revendication 11, dans lequel le matériau composant la face de coupe (405) est sélectionnée dans le groupe comprenant des métaux et des céramiques.

16. Procédé selon la revendication 11, dans lequel le matériau composant la face de coupe (405) est sélectionné dans le groupe comprenant une résine durcie, un composite fibreux, un composite de fibre de carbone, un composite particulaire, l'Invar®, du carbure de silicium et des céramiques de zircone.

17. Procédé selon la revendication 11, dans lequel l'outil comprend en outre un élément de recouvrement (420) qui est positionné sur au moins une partie de la face de coupe (410) et qui enveloppe au moins une partie de la face de coupe, et dans lequel la matière de formation de composite (425) est placée sur la partie enveloppée de la face de coupe, et comprenant en outre l'étape qui consiste à créer un vide à l'intérieur de la partie enveloppée de la face de coupe.
